# EUROPEAN PATENT APPLICATION

(11) **EP 2 615 744 A1**
(43) Date of publication of application: **17.07.2013**
(21) Application number: 12305029.6
(22) Date of filing: 10.01.2012
(51) Int. Cl.: H04B 7/02, H04W 92/20, H04W 72/04, H04W 72/12

(54) **Method for transmitting uplink data, first network node, and second network node thereof**

(71) Applicant: Alcatel Lucent, 75007 Paris (FR)
(72) Inventor: Doll, Mark, 70469 Stuttgart (DE); Doetsch, Uwe, 74392 Freudental (DE); Schreiber, Gerhard, 70825 Korntal-Münchingen (DE)
(74) Representative: Wetzel, Emmanuelle

(57) **Abstract**

The invention relates to a method for transmitting uplink data. The method comprises the steps of determining at a first network node (BS2) at least one first radio resource for an uplink transmission of the uplink data from a mobile station (MS2) to a first antenna system (AS3-BS2) that is assigned to the first network node (BS2) and to a second antenna system (AS1-BS1) that is assigned to a second network node (BS1), providing a received first uplink signal of the first uplink transmission from the first antenna system (AS3-BS2) to the second network node (BS1) or to a third network node, and recovering at the second network node (BS1) or at the third network node the uplink data based on the received first uplink signal. The invention further relates to a first network node (BS2) and to a second network node (BS1).

## Description

### FIELD OF THE INVENTION

The invention relates to radio communication and, more particularly but not exclusively, to transmission of uplink data.

### BACKGROUND

Cellular mobile communication systems, like the 3GPP LTE system (LTE = Long-Term Evolution), rely on MIMO antenna techniques (MIMO = Multiple Input Multiple Output) in order to achieve high spectral efficiency. Furthermore, a frequency re-use of one is often applied to make full use of the available scarce system bandwidth. This leads to a strong imbalance of achievable user rates throughout the cell. Additionally, inter-cell interference becomes the dominating limit for cellular system performance. Techniques like CoMP (CoMP = Coordinated multi-point) deal with this problem. In CoMP several distributed antenna arrays belonging to a same base station or to different base stations are grouped to form a so-called cooperation set of antenna systems responsible for two or more radio cells or radio sectors. The cooperation cluster allows for a simultaneous downlink transmission from the distributed antenna arrays to a mobile station or for a simultaneous uplink reception at the antenna arrays for radio frequency signals transmitted in an uplink direction from the mobile station. This allows forming distributed MIMO systems over the cooperation set of antenna systems, which is also referred to as network MIMO. Receiving uplink radio frequency signals from a mobile station at two or more antenna systems of a cooperation set of antenna systems, forwarding the received uplink radio frequency signals from one or more slave units associated with the cooperation set of antenna systems to a master unit and performing a superposition of the uplink radio frequency signals at the master unit may improve an overall system performance of the radio communication system because of an increased SINR (SINR = Signal to Interference-plus-Noise Ratio) in comparison to receiving the uplink radio frequency signals via a single antenna system and recovering the data from the single received uplink radio frequency signals.

In a fully centralized uplink CoMP transmission scheme a single central network node is selected for the cooperation set of antenna systems which performs scheduling decisions for uplink data of all first mobile stations located within the overall coverage area of the cooperation set of antenna systems and which performs the decoding and recovery of the uplink data of all the first mobile stations.

In a fully distributed uplink CoMP transmission scheme every network node which is responsible for at least one antenna system of the cooperation set of antenna systems performs scheduling decisions for uplink data of all second mobile stations located within a coverage area of the at least one antenna system and which performs the decoding and the recovery of the uplink data of all the second mobile stations.

### SUMMARY

The way of performing uplink CoMP has an impact on required backhaul bandwidth of communication links between network nodes of a radio access network.

Therefore, it is an object of the invention to reduce the required backhaul bandwidth on these communication links.

The object is achieved by a method for transmitting uplink data. The method contains the steps of determining at a first network node at least one first radio resource for an uplink transmission of the uplink data from a mobile station to a first antenna system of a cooperation set of antenna systems that is assigned to the first network node and to a second antenna system of the cooperation set of antenna systems that is assigned to a second network node, providing a received first uplink signal of the first uplink transmission from the first antenna system to the second network node or a third network node, and recovering at the second network node or the third network node the uplink data based on the received first uplink signal.

The object is further achieved by a first network node andby a second network node.

The received first uplink signal may be for example first I/Q samples of a received OFDM frame.

The first network node may be for example a base station of a radio access network, an access point of a WLAN (WLAN = Wireless Local Area Network) or a network node of a further network connected to a network that contains the first antenna system. The further network may be based for example on cloud computing with a functionality that the recovery of the uplink data is distributed across several network nodes of the further network.

The second network node may be for example a further base station of the radio access network, a further access of the WLAN, or a further network node of the further network, which may be for example based on cloud computing (see above).

The third network node may be for example an even further network node of the further network, which may be for example based on cloud computing (see above).

The recovering step may be done by one base station of the cooperation set of antenna systems for all mobile stations, that share the cooperation set of antenna systems and that share same time radio resources and/or frequency radio resources. Further base stations of the cooperation set of antenna systems may transmit received radio samples sharing the same time radio resources and/or the same frequency radio resources to the base station for decoding and data recovery.

The method according to the present invention offers a first benefit of requiring less transmission capacity on backhaul links between radio access network nodes in comparison to a fully distributed uplink CoMP scheme also as described above. In a best case, it allows minimizing an exchange of data on the backhaul links and thereby a maximum required transmission capacity and costs for the backhaul links can be reduced.

In case of the fully centralized uplink CoMP transmission scheme, scheduling decisions have to be signalled in a downlink direction starlike from the central network node to all other network nodes within the cooperation set of antenna systems and uplink data received at all antenna systems of the cooperation set of antenna systems are forwarded to the central network node for decoding and data recovery. Thereby, regarding the present invention a similar amount of data traffic needs to be transmitted on the backhaul links between the radio access network nodes. In case of the fully distributed uplink CoMP transmission scheme scheduling decisions are signalled in a downlink direction only to the antenna systems, which are assigned to the respective radio access network node. But uplink data, which have been received at an antenna system of the cooperation set of antenna systems need to be forwarded to all network nodes of the cooperation set of antenna systems for decoding and data recovery. This forwarding is applied by each antenna system of the cooperation set of antenna systems to each network node, which has a relationship to the cooperation set of antenna systems. The relationship means, that an antenna system, which is assigned to a respective network node, is also assigned to the cooperation set of antenna systems. Thereby, also a lot of data traffic needs to be transmitted on the backhaul links between the radio access network nodes.

The method according to the present invention offers in comparison to the fully centralized CoMP a second benefit of providing a solution for joint uplink reception at a border between two clusters each based on fully centralized CoMP. By an appropriate clustering and splitting of scheduling and decoding functions, each cell border can be located between two radio cells of a same cluster, so that joint uplink reception can be provided at each location within a radio access network with the exception of the border of the radio access network.

In a preferred embodiment, the method further contains the steps of allocating the one or several first radio resources to the second network node or to the third network node for recovering at the second network node or at the third network node the uplink data that are transmitted via the one or the several first radio resources and providing allocation information of the allocation step to the first network node, to the second network node and/or to the third network node.

In a further preferred embodiment, the method further contains the steps of estimating a first load on transmission links between network nodes comprising a first predefined number of antenna systems, estimating at least a second load on further transmission links between further network nodes comprising at least a second predefined number of antenna systems, and selecting the cooperation set of antenna systems comprising the first antenna system and the second antenna system from the first predefined number of antenna systems and the at least second predefined number of antenna systems, for which the first load or the at least second load is minimal or below a first predefined load. In a short for the further preferred embodiment, the method further contains the step of selecting the cooperation set of antenna systems from a set of at least two cooperation sets of antenna systems for which a load on transmission links between network nodes controlling the selected cooperation set of antenna systems is minimized or below the first predefined load.

In an even further preferred embodiment, the method further contains the steps of estimating a third load on uplink channels from the first mobile station to the first predefined number of antenna systems, estimating at least a fourth load on further uplink channels from the first mobile station to the at least second predefined number of antenna systems, and the cooperation set of antenna systems is further selected from the first predefined number of antenna systems and the at least second predefined number of antenna systems, for which the third load or the at least fourth load is minimal or below a second predefined load. In a short for the even further preferred embodiment, the selecting step further minimizes a load on uplink channels from the mobile station to the selected cooperation set of antenna systems or limits the load on the uplink channels from the mobile station to the cooperation set of antenna systems below the second predefined load.

The even further preferred embodiment allows in addition a minimization of data to be transmitted on the air interface from mobile stations located within a predefined area to the cooperation set of antenna systems and thereby an overall throughput on the uplink can be increased.

According to another embodiment, the further network node and the cooperation set of antenna system is selected, if the further network node serves a number of mobile stations above a predefined number within the cooperation set of antenna systems or serves most mobile stations within said cooperation set of antenna systems. This selection criterion allows to further reducing the required backhaul capacity between the first and the second antenna system and the second network node.

According to a further another embodiment, the method further contains the steps of providing from the further network node or from the even further network node the recovered uplink data to the network node, which serves the first mobile station, and providing from the network node the recovered uplink data to a core network node of a cellular mobile communication network or to a network gateway of a radio access network. This embodiment enables the first network node to get aware of a successful recovery of the uplink data of the mobile station and it is consistent to existing radio communication standards requiring same transmission paths via the first network node for downlink data to the mobile station and for uplink data from the mobile station.

According to an alternative embodiment, the method further contains the step of providing directly from the further network node or from the even further network node the recovered first uplink data to a core network node of a cellular mobile communication network or to a network gateway of a radio access network. Thereby, the transmission of data on the backhaul links can be further reduced, if it is allowed by a radio communication standard, that downlink data traffic for the mobile station and uplink data traffic from the mobile station can be processed and forwarded via different network nodes such as different radio access network nodes.

In a further embodiment, the method further contains the step of providing from the further network node of from the even further network node optimization information obtained by the recovering step to the network node for optimizing at the network node a next determination of radio resources for the uplink transmission from the mobile station to the first antenna system and the second antenna system. The optimization information may contain for example channel state information of the uplink transmission. Thereby, transmission errors can be reduced and an overall data throughput of a radio communication system can be increased.

Preferably, the method further contains the steps of verifying, whether the received first uplink data fulfill a predefined criterion, and the received first uplink data are provided to the further network node or the even further network node, if the predefined criterion is fulfilled. This allows further reducing data transmission on the backhaul links, if for example the received first uplink data almost contain only external noise or atmospheric noise, which cannot support the recovering process for the uplink data at the further network node or the even further network node.

In a further preferred embodiment, the method further contains the step of providing scheduling information from the network node to the further network node or the even further network node and the scheduling information contains information how to decode and recover the received first uplink signal. The further preferred embodiment allows the network node to flexibly adapting the uplink transmission by changing for example the coding type or the modulation type to instantaneous channel conditions. Such changed parameters needs to be signaled from the network node to the further network node or to the even further network node. Furthermore, this embodiment allows identifying a packet loss on an interface between the first network node and the second network node. In case of a packet loss, a retransmission on the interface between the first network node and the second network node may be requested by the second network node. Preferably, the method may be applied, if a working load of the at least first radio resource is above a predefined threshold, if the first mobile station is transmitting with a maximum transmit power and/or if the first mobile station is unable to occupy all radio resources allocated to the first mobile station with uplink data. This allows disabling the uplink CoMP transmission scheme for a specific region of the radio communication network, if one or several of the conditions are not fulfilled, and thereby the required backhaul bandwidth for uplink CoMP is reduced to zero. This allows further reducing a maximum required transmission capacity on the backhaul links. According to a further preferred embodiment, the at least one first radio resource is determined from a predefined group of radio resources and wherein the method further contains the step of assigning the predefined group of radio resources to the cooperation set of antenna systems. According to an even further preferred embodiment, the assignment of the predefined group of radio resources to the cooperation set of antenna systems is predefined.

According to another preferred embodiment, the method further contains the steps of receiving at the further network node first allocation information for assigning the predefined group of radio resources to the cooperation set of antenna systems and for recovering the uplink data based on the received first uplink signal at the further network node or at the even further network node, and receiving at the network node second allocation information for assigning the predefined group of radio resources to the cooperation set of antenna systems and for recovering the uplink data based on the received first uplink signal at the further network node or at the even further network node.

According to an even another preferred embodiment, the method further contains the step of receiving at the even further network node third allocation information for assigning the predefined group of radio resources to the cooperation set of antenna systems and for recovering the uplink data based on the received first uplink signal at the even further network node.

In a further preferred embodiment, the cooperation set of antenna systems contains a predefined coverage area and the method further contains the step of assigning a further predefined group of radio resources to a further cooperation set of antenna systems that contains a further predefined coverage area partly overlapping with the predefined coverage area.

### BRIEF DESCRIPTION OF THE FIGURES

The embodiments of the invention will become apparent in the following detailed description and will be illustrated by accompanying figures given by way of non-limiting illustrations.
Figure 1 shows schematically a radio access network with two base stations and six radio cells and two mobile stations in uplink communication to the radio access network by applying an uplink CoMP transmission scheme.
Figure 2 shows schematically a splitting of a radio resource block into four predefined groups of radio resources and a splitting of a further radio resource block into three predefined groups of radio resources and a further overlaying predefined group of radio resources.
Figure 3 shows schematically a hexagonal grid of radio cells with six potential cooperation sets of antenna systems, which each contain three radio cells, and with a highlighted network node for decoding of uplink signals of uplink data and data recovery of the uplink data for a respective cooperation set of antenna systems.
Figure 4 shows schematically a radio access network with six radio cells, a further network connected to the radio access network, and two mobile stations in uplink communication to the radio access network by applying an uplink CoMP transmission scheme.
Figures 5a and 5b show schematically a flow diagram of a method in accordance to the embodiments of the invention.
Figure 6 shows schematically a block diagram of a first network node according to the embodiments of the invention.
Figure 7 shows schematically two block diagrams of a second network node according to the embodiments of the invention.
Figure 8 shows schematically a block diagram of a third network node according to the embodiments of the invention.

### DESCRIPTION OF THE EMBODIMENTS

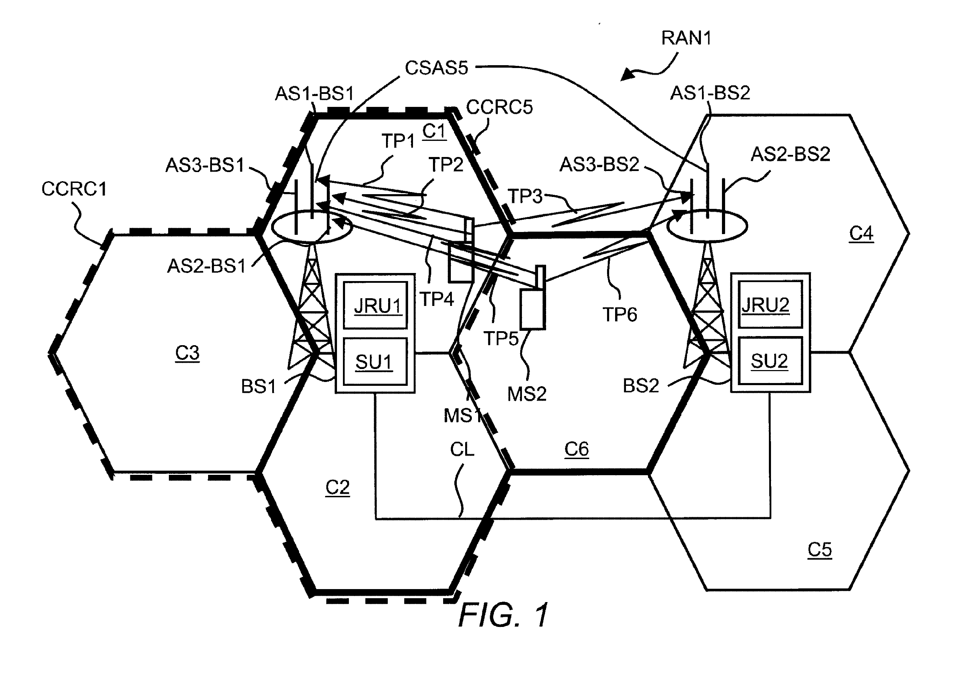

Figure 1 shows schematically a radio access network RAN1, which contains exemplarily a first base station BS1 and a second base station BS2. Further base stations and other network nodes of the radio access network RAN1 are not shown for simplification. The radio access network RAN1 may be for example a WLAN such as defined by IEEE 802.11 standards, a WiMAX network (WiMAX = Worldwide Interoperability for Microwave Access) such as one of the IEEE 802.16 family of wireless-networks standards ratified by the WiMAX Forum or an LTE access network (LTE = Long Term Evolution) such as defined by 3GPP (3GPP = Third Generation Partnership Project). The term "base station" may be considered synonymous to and/or referred to as a base transceiver station, access point base station, access point, macrocell, microcell, femtocell, picocell etc. and may describe equipment that provides wireless connectivity via one or more radio links to one or more mobile stations. The first base station BS1 and the second base station BS2 may be for example an LTE Node B, an IEEE 802.11 access point, a WiMAX base station etc.

The first base station BS1 may be connected to the second base station BS2 by a communication link CL1. The communication link CL1 may be for example an X2 interface such as specified for 3GPP LTE radio communication networks.

The first base station BS1 contains for example a first antenna system AS1-BS1 for providing wireless coverage for a first radio cell C1, a second antenna system AS2-BS1 for providing wireless coverage for a second radio cell C2, and a third antenna system AS3-BS1 for providing wireless coverage for a third radio cell C3. Alternatively, the first base station BS1 may contain only a single antenna system or more than three antenna systems. The antenna systems AS1-BS1, AS2-BS1 and AS3-BS1 may be mounted for example on a first antenna mast.

A first mobile station MS1 may be located exemplarily within the first radio cell C1 near a border to a sixth radio cell C6. Further first mobile stations are not shown within the radio cells C1, C2 and C3 for simplification.

The first base station BS1 further contains a first scheduling unit SU1 for determining uplink radio resources for mobile stations such as the first mobile station MS1, which are located within one of the radio cells C1, C2, C3.

The second base station BS2 contains exemplarily a first antenna system AS1-BS2 for providing wireless coverage for a fourth radio cell C4, a second antenna system AS2-BS2 for providing wireless coverage for a fifth radio cell C5, and a third antenna system AS3-BS2 for providing wireless coverage for the sixth radio cell C6. The antenna systems AS1-BS2, AS2-BS2 and AS3-BS2 may be mounted for example at a second antenna mast. A second mobile station MS2 may be located exemplarily within the sixth radio cell C6 near a border to the first radio cell C1. Further second mobile stations are not shown within the radio cells C4, C5 and C6 for simplification.

The second base station BS2 further contains a second scheduling unit SU2 for determining uplink radio resources for further mobile stations such as the second mobile station MS2, which are located within one of the radio cells C4, C5, C6.

The first base station BS1 and the second base station BS2 may independently schedule mobile stations, which are located in one of the radio cells, which are controlled by the first base station BS1 or the second base station BS2.

The antenna systems AS1-BS1, AS2-BS1, AS3-BS1, AS1-BS2, AS2-BS2 and AS3-BS2 may contain exemplarily two antenna elements. Alternatively, some or all of these antenna elements may contain a single antenna element or more than three antenna elements.

The term "mobile station" may be considered synonymous to, and may hereafter be occasionally referred to, as a mobile unit, mobile user, access terminal, user equipment, subscriber, user, remote station etc. The first mobile station MS1 and the second mobile station MS2 may be for example a cellular telephone, an LTE smart phone, a portable computer such as a notebook with a WLAN and/or an LTE interface card, a USB data stick with a WLAN and/or an LTE interface, a pocket computer, a hand-held computer, a personal digital assistant, or an integrated circuit, which can be implemented in any portable device or vehicle etc.

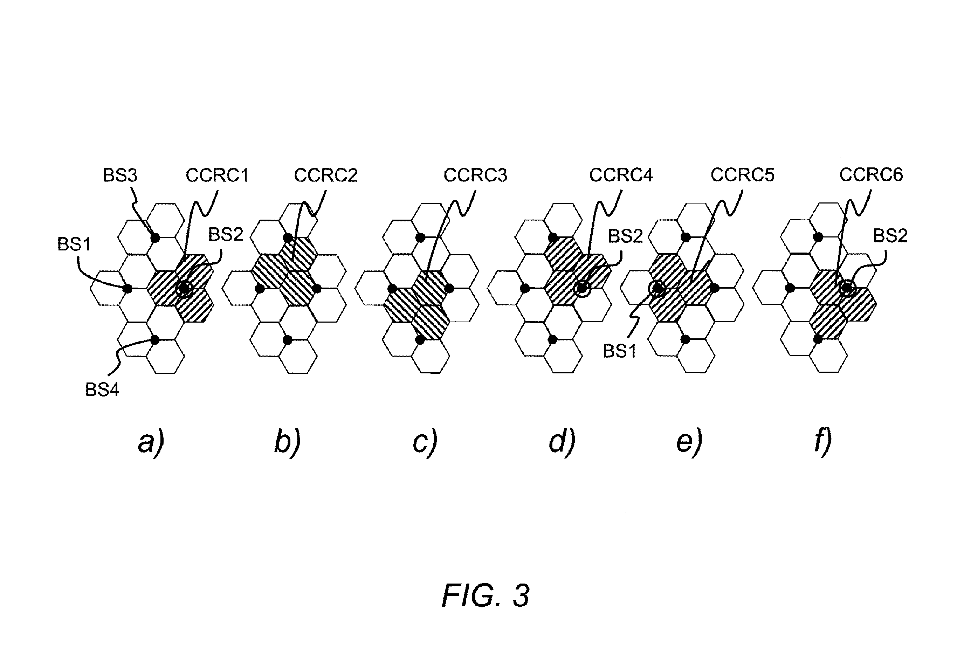

The first antenna system AS1-BS1 and the second antenna system AS2-BS1 of the first base station BS1 and the third antenna system AS3-BS2 of the second base station BS2 may be exemplarily allocated to a fifth cooperation set of antenna systems CSAS5 as shown in Figure 1 (see also Figure 3 e)). This means that the first radio cell C1, the second radio cell C2 and the sixth radio cell C6 are a so-called cooperation cluster of radio cells CCRC5 for providing network MIMO in this area. Alternatively, the cooperation set of antenna systems CSA5S contains more than two antenna systems and the cooperation cluster contains more than two radio cells.

A further cooperation cluster of radio cells CCRC1 for providing network MIMO contains the first radio cell C1, the second radio cell C2 and the third radio cell C3, which partly overlaps with the cooperation cluster of radio cells CCRC5 by the radio cells C1 and C2 (see also Figure 3).

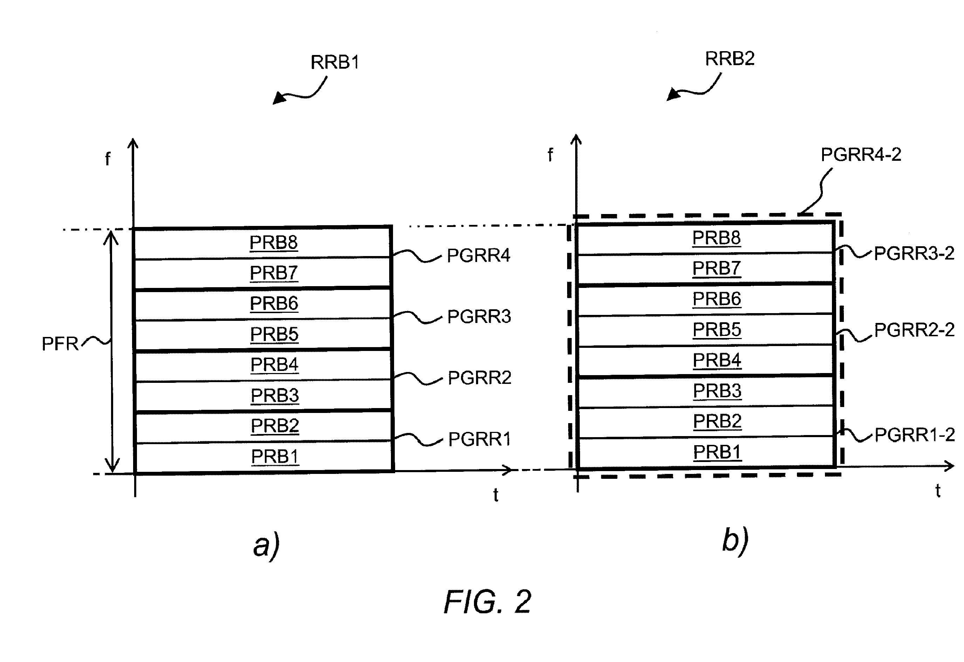

The first base station BS1 may further contain a first reception unit JRU1, which may be for example a first joint reception unit, for processing uplink signals that have been received via a third predefined group of radio resources PGRR3 (see Figure 2 a)) by the fifth cooperation set of antenna systems CSAS5 and for decoding and recovering the first uplink data. Similarly, the second base station BS2 may further contains a second reception unit JRU2, which is a second joint reception unit, for processing further uplink signals that have been received via a second predefined group of radio resources PGRR2 (see Figure 2 a)) by a fourth cooperation set of antenna systems CSAS4 and for recovering the second uplink data. A first radio resource block RRB1 as exemplarily shown in Figure 2 a) may be based for example on a predefined frequency range PFR that is allocated to an operator of a radio communication system. Regarding 3GPP LTE for example, the predefined frequency range PFR may be for example a frequency range of 1.4 MHz, 3 MHz, 5 MHz, 10 MHz, 15 MHz, or 20 MHz.

The predefined frequency range PFR may contains exemplarily eight PRBs (PRB = physical resource block), which each contain for example in 3GPP LTE 12 frequency subcarriers FS with a PRB length of for example 1 ms = 14 OFDM symbol times and an OFDM symbol time length of for example 66.7 µs. A first PRB PRB1 and a second PRB PRB2 may be assigned for example to a first predefined group of radio resources PGRR1. A third PRB PRB3 and a fourth PRB PRB4 may be assigned for example to the second predefined group of radio resources PGRR2. A fifth PRB PRB5 and a sixth PRB PRB6 may be assigned for example to the third predefined group of radio resources PGRR3. A seventh PRB PRB7 and an eighth PRB PRB8 may be assigned for example to a fourth predefined group of radio resources PGRR4.

Generally, time radio resources and/or frequency radio resources of a radio cell may be partitioned into a number of predefined groups of radio resources in such a way, that the number of predefined groups of radio resources is equal to a number of cooperation sets of antenna systems the antenna system is part of.

This further means that antenna systems, which are assigned to a specific cooperation set of antenna systems, apply a same predefined group of radio resources. Thereby, all mobile stations, which are assigned to the same predefined group of radio resources apply same radio resources. These assignments allow that the base stations BS1, BS2 can autonomously schedule dedicated mobile stations MS1, MS2 without any prior signalling among the cooperating base stations BS1, BS2.

This even further means that disjoint cooperation sets of antenna systems, which contain not a same antenna system, may be assigned a same predefined group of radio resources.

In principle, a cooperation set of antenna systems may be selected in such a way, that a number of radio cells assigned to other network nodes than a network node, which may be responsible for the recovery of the uplink data transmitted via a predefined group of radio resources, is minimized. Thereby, a number of predefined groups of radio resources can be reduced and a size of remaining predefined groups of radio resources can be increased. In particular, if radio resource partitioning is based on frequency radio resources, too small partitions will reduce a gain of frequency selective scheduling.

In case of a hexagonal grid of radio cells with the first base station BS1, the second base station BS2, a third base station BS3 and a fourth base station BS4 such as shown in Figure 3 six different cooperation clusters of radio cells CCRC1, CCRC2, CCRC3, CCRC4, CCRC5, CCRC6, exists, which each contain three radio cells (indicated by a hatching) and which are partly overlapping.

A first preferred embodiment is shown in Figure 3 a) for a first intra-site cooperation cluster of radio cells CCRC1. In this case, all radio cells belong to the second base station BS2, which is responsible for the decoding of received uplink signals and for the recovery of the uplink data.

In Figure 3 d), e) and f), three further preferred embodiments for the fourth cooperation cluster of radio cells CCRC4, for the fifth cooperation cluster of radio cells CCRC5, and for a sixth cooperation cluster of radio cells CCRC6 with two radio cells belonging to the first base station BS1 or the second base station BS2, which performs the decoding of the received uplink signals and the recovery of the uplink data. In these cases, most radio cells belong to that base station, which is responsible for the decoding of the received uplink signals and the recovery of the uplink data.

The embodiments shown in Figure 3 b), c) may be not used, because each of the base stations BS1, BS2, BS3, BS4 is only responsible for one radio cell of the cooperation clusters of radio cells CCRC2, CCRC3 and therefore, uplink signals need to be transmitted from antenna systems of two radio cells assigned to two further base stations to the base station, which would perform the recovery step for the uplink data.

Using the four cooperation clusters of radio cells CCRC1, CCRC4, CCRC5, CCRC6 a cellular mobile radio network can be served without any coverage gaps for uplink CoMP. This means, available radio resources of all radio cells of the cellular mobile radio network may be partitioned in a same way into four predefined groups of radio resources.

Following table 1 shows and summarizes an assignment of antenna systems to the four cooperation clusters of radio cells CCRC1, CCRC4, CCRC5, CCRC6, an assignment of the four predefined group of radio resources PGRR1, PGRR2, PGRR3, PGRR4 to the four cooperation clusters of radio cells CCRC1, CCRC4, CCRC5, CCRC6 and an assignment of a network node to the four predefined group of radio resources PGRR1, PGRR2, PGRR3, PGRR4.

**Table 1 (*: a third antenna system is not shown in Figure 1 for simplification)**

| Cooperation cluster of radio cells | Assigned antenna systems and responsible network nodes in brackets | Assigned predefined group of radio resources | Assigned PRBs (see Figure 2 a)) | Assigned network node responsible for decoding of uplink signals and recovery of uplink data |
|---|---|---|---|---|
| CCRC1 | AS1-BS2 (BS2), AS2-BS2 (BS2), AS3-BS2 (BS2) | PGRR1 | PRB1, PRB2 | BS2 |
| CCRC4 | AS1-BS2 (BS2), AS3-BS2 (BS2), (*) | PGRR2 | PRB3, PRB4 | BS2 |
| CCRC5 | AS1-BS1 (BS1), AS2-BS1 (BS1), AS3-BS2 (BS2) | PGRR3 | PRB5, PRB6 | BS1 |
| CCRC6 | AS2-BS2 (BS2), AS3-BS2 (BS2), (*) | PGRR4 | PRB7, PRB8 | BS2 |

According to an alternative embodiment shown in Figure 2 b), a second radio resource block RRB2 covers the predefined frequency range PFR that contains the eight PRBs PRB1 to PRB8. The first PRB PRB1, the second PRB PRB2 and the third PRB PRB3 may be assigned for example to a further first predefined group of radio resources PGRR1-2, The fourth PRB PRB4, the fifth PRB PRB5, the sixth PRB PRB6 may be assigned for example to a further second predefined group of radio resources PGRR2-2. The seventh PRB PRB7 and the eighth PRB PRB8 may be assigned for example to a further third predefined group of radio resources PGRR3-2. A further fourth predefined group of radio resources PGRR4-2 may be identical to the whole second radio resource block RRB2. Regarding the table 1, the predefined groups of radio resources PGRR1 to PGRR4 may be replaced by the further predefined groups of radio resources PGRR1-2 to PGRR4-2 and the column for the assigned PRBs may be adapted according to the PRB distribution of Figure 2 b).

The functionality of the first base station BS1 and the second base station BS2 regarding the invention may be exchanged from one predefined group of radio resources to another predefined group of radio resources as described above. This means in a larger radio access network, that in average each base station may transmit and receive uplink data via communication links between the base stations and a backhaul bandwidth of the communication link may be equal in both directions.

The uplink data and the further uplink data may be for example voice data such as VoIP (VoIP = voice over Internet Protocol), email data, web browsing data, streaming data or FTP download data (FTP = File Transfer Protocol).

The first base station BS1 may determine one or more first radio resources of the third predefined group of radio resources PGRR3 for an uplink transmission of the uplink data from the first mobile station MS1 to the first antenna system AS1-BS1 of the first base station BS1 via a first transmission path TP1, to second antenna system AS2-BS1 of the first base station BS1 via a second transmission path TP1 and to the third antenna system AS3-BS2 of the second base station BS2 via a third transmission path TP3. Uplink signals of the uplink data are received at the first antenna system AS1-BS1 of the first base station BS1 as one or several first uplink signals and are provided from the second antenna system AS2-BS1 of the first base station BS1 to the first base station BS1 for decoding and data recovery. Uplink signals of the uplink data are received at the second antenna system AS1-BS2 of the first base station BS1 as one or several second uplink signals and are provided from the second antenna system AS2-BS1 of the first base station BS1 to the first base station BS3 for decoding and data recovery. Uplink signals of the uplink data are received at the third antenna system AS3-BS2 of the second base station BS2 as one or several third uplink signals and are provided from the third antenna system AS3-BS2 of the second base station BS2 via the second base station BS2 and the communication link CL to the first base station BS1 for decoding and data recovery. The first base station BS1 decodes and recovers the uplink data based on the one or several received first uplink signals, based on the one or several received second uplink signals and based on the one or several received third uplink signals.

Similarly, the second base station BS2 may determine one or more second radio resources of the third predefined group of radio resources PGRR3 for an uplink transmission of the further uplink data from the second mobile station MS2 to the first antenna system AS1-BS1 of the first base station BS1 via a fourth transmission path TP4, to the second antenna system AS2-BS1 of the first base station BS1 via a fifth transmission path TP5, and to the third antenna system AS3-BS2 of the second base station BS2 via a sixth transmission path TP6. Further uplink signals of the further uplink data are received at the first antenna system AS1-BS1 of the first base station BS1 as one or several further first uplink signals and are provided from the first antenna system AS1-BS1 of the first base station BS1 to the first base station BS1. The further uplink signals are received at the second antenna system AS2-BS1 of the first base station BS1 as one or several further second uplink signals and are provided from the second antenna system AS2-BS1 to the first base station BS1 to the first base station BS1. The further uplink signals are received at the third antenna system AS3-BS2 of the second base station BS2 as one or several further third uplink signals and are provided from the third antenna system AS3-BS2 of the second base station BS2 via the second base station BS2 and the communication link CL to the first base station BS1. The first base station BS1 decodes and recovers the further uplink data based on the one or several received further first uplink signals, based on the one or several received further second uplink signals and based on the one or several received further third uplink signals.

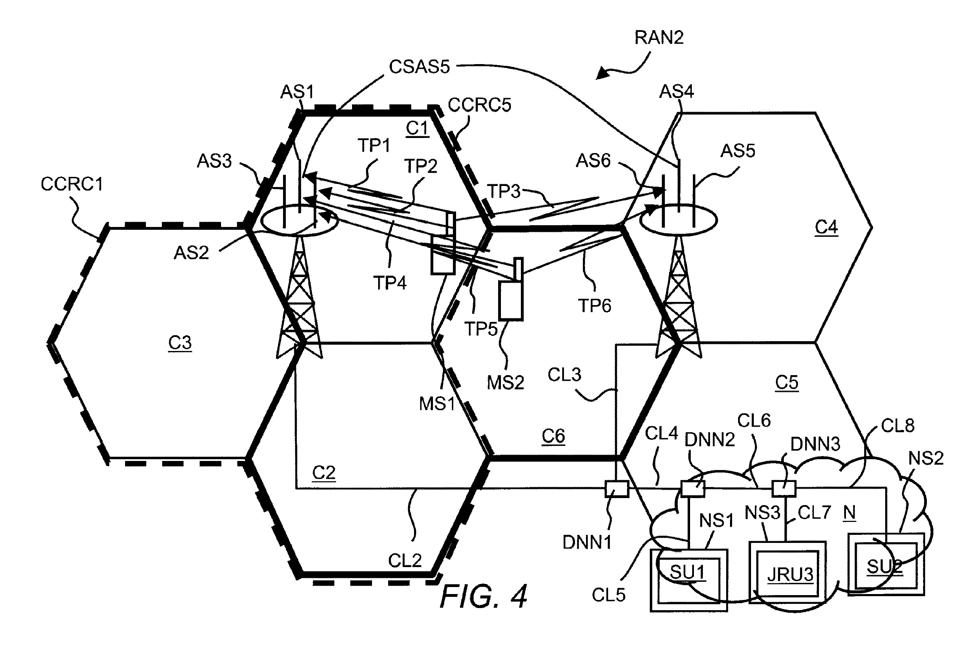

Figure 4 shows schematically a further radio access network RAN2 and a further network N, which may be connected to the further radio access network RAN2. The elements in Figure 2 that correspond to elements of Figure 1 have been designated by same reference numerals.

In comparison to the embodiment shown in Figure 1, the further network N may contain a first network server NS1, a second network server NS2 and a third network server NS3. The further network N may be for example based on cloud computing by sharing resources, software, and information between different operators that own different radio access networks.

The first network server NS1 may contain the first scheduling unit SU1 for determining uplink radio resources for mobile stations such as the first mobile station MS1 and the second mobile station MS2, which are located within one of the radio cells C1, C2, C3.

The second network server NS2 may contain the second scheduling unit SU2 for determining uplink radio resources for further mobile stations, which are located within one of the further radio cells C4, C5, C6.

The third network server NS3 may contain a third reception unit JRU3 for decoding and recovering uplink data that have been received via the third predefined group of radio resources PGRR3 (see Figure 2) by the fifth cooperation set of antenna systems CSAS5.

Alternatively, a cellular mobile radio network may contain the radio access network RAN2 and a core network. In such a case, the further network N may be for example the core network of the cellular mobile radio network. The radio access network RAN2 contains a first antenna system AS1 with two first antenna elements for providing wireless coverage for the first radio cell C1, a second antenna system AS2 with two second antenna elements for providing wireless coverage for the second radio cell C2, a third antenna system AS3 with two third antenna elements for providing wireless coverage for the third radio cell C3, a fourth antenna system AS4 with two fourth antenna elements for providing wireless coverage for the fourth radio cell C4, a fifth antenna system AS5 with two fifth antenna elements for providing wireless coverage for the fifth radio cell C5 and a sixth antenna system AS6 with two sixth antenna elements for providing wireless coverage for the sixth radio cell C6.

Alternatively, the antenna systems AS1, AS2, AS3, AS4, AS5 and AS6 may contain one, two, four or more antenna elements in a same way or independently from each other and may be for example remote radio heads.

The antenna systems AS1, AS2, AS3, AS4, AS5 and AS6 may be connected to the first network server NS1, the second network server NS2 and the third network server NS3 via communication links CL2, CL3, CL4, CL5, CL6, CL7 and CL8 and distribution network nodes DNN1, DNN2 and DNN3 connecting the communication links CL2, CL3, CL4, CL5, CL6, CL7 and CL8.

The communication links CL2, CL3, CL4, CL5, CL6, CL7 and CL8 may be based for example on IPv4 (IPv4 = Internet Protocol version 4) or IPv6 (IPv6 = Internet Protocol version 6) and the received uplink signals may be transmitted with IP packets of high priority for obtaining a low latency transmission. The distribution network nodes DNN1, DNN2 and DNN3 may be for example IPv4 or IPv6 routers preferably with sub-millisecond latency for the routing of the IP packets.

In an alternative, the communication links CL2, CL3, CL4, CL5, CL6, CL7 and CL8 may be based on Ethernet links and the distribution network nodes DNN1, DNN2 and DNN3 may be Ethernet switches.

Equally to the embodiment shown in Figure 1, for the cooperation cluster of radio cells CCRC and for the third predefined group of radio resources PGRR3, the first network server NS1 determines one or more first radio resources of the third predefined group of radio resources PGRR3 for an uplink transmission of the uplink data from the first mobile station MS1 to the first antenna system AS1 via the first transmission path TP1, to the second antenna system AS2 via the second transmission path TP2 and to the sixth antenna system AS6 via the third transmission path TP3. The uplink data are received at the first antenna system AS1 as the first uplink signals and are provided from the first antenna system AS1 to the third network server NS3. The uplink data are received at the second antenna system AS2 as the second uplink signals and are provided from the second antenna system AS2 to the third network server NS3. The uplink data are received at the sixth antenna system AS6 as the third uplink signals and are provided from the sixth antenna system AS6 to the third network server NS3. The third network server NS3 may decode and recover the uplink data based on the received first uplink signals, based on the received second uplink signals and based on the received third uplink signals.

Similarly for the cooperation cluster of radio cells CCRC and for the third predefined group of radio resources PGRR3, the second network server NS2 determines one or more second radio resources of the third predefined group of radio resources PGRR3 for an uplink transmission of the further uplink data from the second mobile station MS2 to the first antenna system AS1 via the fourth transmission path TP4, to the second antenna system AS2 via the fifth transmission path TP5, and to the sixth antenna system AS6 via the sixth transmission path TP6. The further uplink data are received at the first antenna system AS1 as the further first uplink signals and are provided from the first antenna system AS1 to the third network server NS3. The further uplink data are received at the second antenna system AS2 as the further second uplink signals and are provided from the second antenna system AS2 to the third network server NS3. The further uplink data are received at the sixth antenna system AS6 as the further third uplink signals and are provided from the sixth antenna system AS6 to the third network server NS3. The third network server NS3 decodes and recovers the further uplink data based on the received further first uplink signals, based on the received further second uplink signals, and based on the received further third uplink signals.

According to a preferred embodiment, the first network server NS1 determines one or more first radio resources of the third predefined group of radio resources PGRR3 for an uplink transmission of the uplink data from the first mobile station MS1 to the first antenna system AS1 via the first transmission path TP1 to the second antenna system AS2 via the second transmission path TP2 and to the sixth antenna system AS6 via the third transmission path TP3 and determines one or more second radio resources of the third predefined group of radio resources PGRR3 for an uplink transmission of the further uplink data from the second mobile station MS2 to the first antenna system AS1 via the fourth transmission path TP4, to the second antenna system AS2 via the fifth transmission path TP5 and to the sixth antenna system AS6 via the sixth transmission path TP6. In such a case, no processing resources are required at the second network server NS2 or processing resources at the second network server NS2 may be applied for other radio cells of the radio access network RAN2.

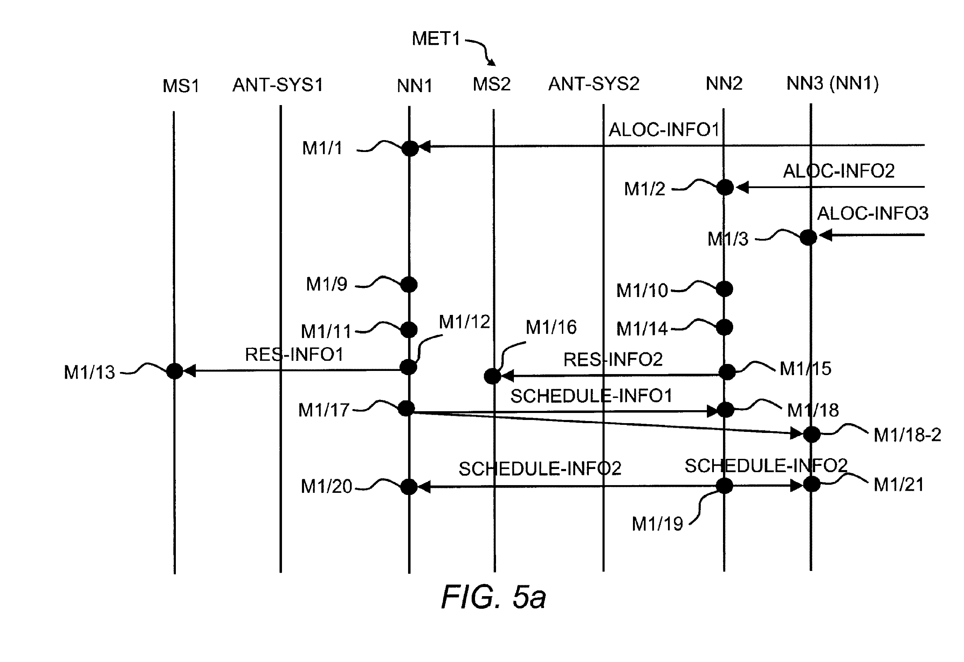

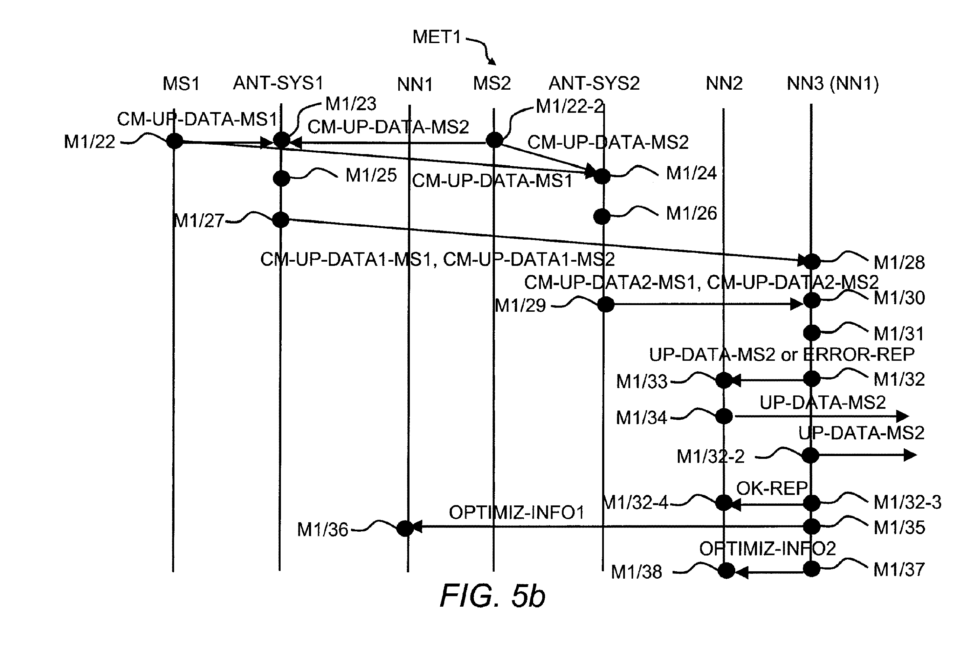

Referring to Figure 5a and Figure 5b a flow diagram of a method MET1 in accordance to several embodiments of the invention is shown. The number of the steps for performing the method MET1 is not critical, and as can be understood by those skilled in the art, that the number of the steps and the sequence of the steps may vary without departing from the scope of the present invention as defined in the appended claims, e.g. some of the steps may be performed simultaneously, some of the steps may be alternative steps, or some of the steps may be ignored.

The method MET1 may be executed by the first mobile station MS1, by a first antenna system ANT-SYS1, by a first network node NN1, by the second mobile station MS2, by a second antenna system ANT-SYS2, by a second network node NN2, and in some embodiments by a third network node NN3.

The first antenna system ANT-SYS1 may be one of the antenna systems AS1-BS1, AS2-BS1, AS3-BS1, AS1-BS2, AS2-BS2, AS3-BS2 of the first embodiment shown in Figure 1 or one of the antenna systems AS1, AS2, AS3, AS4, AS5, AS6 of the second embodiment shown in Figure 4. The second antenna system ANT-SYS2 may be a further one of the antenna systems AS1-BS1, AS2-BS1, AS3-BS1, AS1-BS2, AS2-BS2, AS3-BS2 of the first embodiment shown in Figure 1 or a further one of the antenna systems AS1, AS2, AS3, AS4, AS5, AS6 of the second embodiment shown in Figure 4.

According to Figure 1, the first network node NN1 is the first base station BS1, the second network node NN2 is the second base station BS2 and the third network node NN3 is not required. This means, the steps M1/18-2, M1/19, M1/28, M1/30, M1/31, M1/32, M1/32-2, and M1/35 are performed by a single network node, which is the first base station BS1 and the steps M1/3, M1/21, M1/37 and M1/38 are not required.

According to Figure 4, the first network node NN1 is the first network server NS1, the second network node NN2 is the second network server NS2, and the third network node NN3 is the third network server NS3.

According to the alternative as described further above, steps of the first network node NN1 and the second network node NN2 may be performed by a single network node such as the first network server NS1 or the second network server NS2. This means, the steps M1/18 and M1/20 are not required.

Preferably, in a first step M1/1, the first network node NN1 receives first allocation information ALOC-INFO1 for example from an O&M network node (O&M = operation and maintenance) for example during initialisation of the first network node NN1. The first allocation information ALOC-INFO1 contains information of predefined groups of radio resources such as one or several PRB identifiers for each predefined group of radio resources, information of predefined group of antenna systems such as two or more identifiers of antenna systems for each predefined group of antenna systems, a mapping between the predefined groups of radio resources and the predefined group of antenna systems and an indicator for indicating a network node, which is responsible for the decoding of the received uplink signals and for the recovery of the uplink data received via a respective predefined group of radio resources (see Table 1). The first allocation information ALOC-INFO1 may be limited to those predefined group of antenna systems to which one of the antenna systems - for which the first network node NN1 is responsible - is assigned. From the first allocation information ALOC-INFO1 may be deduced for example, that the first network node NN1 or the third network node NN3 is responsible for the recovery of the uplink data transmitted by radio resources of the third predefined group of radio resources PGRR3.

Preferably, in a second step M1/2, the second network node NN2 receives second allocation information ALOC-INFO2 also for example from the O&M network node (O&M = operation and maintenance) for example during initialisation of the second network node NN2. The second allocation information ALOC-INF02 also contains information of predefined groups of radio resources such as PRB identifiers for each predefined group of radio resources, information of predefined group of antenna systems such as identifiers of antenna systems for each predefined group of antenna systems, a mapping between predefined groups of radio resources and predefined group of antenna systems and preferably an indication, which network node is responsible for the decoding of the received uplink signals and for the recovery of the uplink data received via a respective predefined group of radio resources (see Table 1). The second allocation information ALOC-INFO2 may be limited to those predefined group of antenna systems to which one of the antenna systems - for which the second network node NN2 is responsible - is assigned.

According to the embodiment of Figure 4, the first allocation information ALOC-INFO1 may be further received at the antenna system ANT-SYS1 and the second allocation information ALOC-INFO2 may be further received at the antenna system ANT-SYS2. In such a case, the antenna systems ANT-SYS1, ANT-SYS2 may contain an algorithm for handling received uplink data, which decides which received uplink data shall be forwarded to which network node.

Preferably, in a third step M1/3, the third network node NN3 receives third allocation information ALOC-INFO3 also for example from the O&M network node (O&M = operation and maintenance) for example during initialisation of the third network node NN3. The third allocation information ALOC-INFO3 also contains a mapping between predefined groups of radio resources and predefined group of antenna systems for which the third network node NN3 is responsible regarding the decoding of the received uplink signals and the recovery of the uplink data received via a respective predefined group of radio resources (see Table 1).

In a further step M1/9, the first network node NN1 may verify for example periodically, whether a CoMP transmission scheme for the uplink is suitable for one or several mobile stations such as the first mobile station MS1, which is/are located for example in the first radio cell C1. Therefore, the first network node NN1 may verify according to a first condition, whether a working load of for example the third predefined group of radio resources PGRR3 is above a predefined threshold such as 90 % of all radio resources of the third predefined group of radio resources PGRR3. In addition or alternatively, the first network node NN1 may verify according to a second condition, whether there exist(s) one mobile station or more mobile stations within the first radio cell C1, which transmit(s) currently with a maximum transmit power. In addition or as a further alternative, the first network node NN1 may verify according to a third condition, whether a mobile station resides or several mobile stations reside within the first radio cell C1, which cannot be served by a predefined minimum data rate by receiving the uplink data only at a single antenna system.

The first network node NN1 may decide to perform the CoMP transmission scheme for the uplink transmission of for example the first mobile station MS1, if one or several of the above conditions are fulfilled. If the first network node NN1 may decide not to perform the CoMP transmission scheme for the uplink transmission for one of the mobile stations in the first radio cell C1, the method MET1 may be stopped and may be started again for example after a predefined time such as 5 ms, 50 ms, 100 ms, 500 ms or 1 s.

The verification and decision may be not required, if the CoMP transmission scheme may be applied generally within the second radio cell C2. Preferably during the step M1/9, the first network node NN1 may estimate a first load on communication links between network nodes such as the first base station BS1 and the second base station BS2 or the first network server NS1 and the second network server NS2, which manage a predefined group of antenna systems such as the fifth predefined group of antenna systems CSAS5. The estimation of the first load may be based on a current load on the communication links and a further load, that would result from a reception of uplink signals at the fifth predefined group of antenna systems CSAS5 and from a forwarding the these uplink signals via the communication links. The further load is mainly determined by a data rate, that is required to fulfil QoS requirements for the first mobile station MS1 and by a current radio link quality (a poor radio link quality requires more radio resources and more retransmissions with a higher load than a good radio link quality). Preferably during the step M1/9, the first network node NN1 may estimate a second load and preferably further transmission link loads on further transmission links between the network nodes or further network nodes (not shown in Figure 1 and Figure 4 for simplification) managing a further predefined group of antenna systems.

Preferably during the step M1/9, the first network node NN1 may estimate first processing loads at network nodes of one of the predefined groups of antenna systems CSAS1, CSAS4, CSAS4, CSAS6 (see Figure 3).

Preferably during the step M1/9, the first network node NN1 may estimate second processing loads and prefereably further processing loads at network nodes of one or several further predefined cooperation sets of antenna systems CSAS1, CSAS4, CSAS4, CSAS6 (see Figure 3).

Preferably during the step M1/9, the first network node NN1 may select the fifth cooperation set of antenna systems CSAS5, for which the first load, the second load or one of the further transmission link loads is smallest or for which the first load, the second load or one of the further transmission link loads is below a first predefined load for having free transmission capacity on transmission links for potential further CoMP receptions of further uplink signals from further mobile stations or for which of the first load, the second load or one of the further transmission link loads no overload arises.

In principle, a cooperation set of antenna systems and an assigned predefined group or radio resources may be selected in such a way, that a number of radio cells assigned to other network nodes than the network node, which may be responsible for the recovery of the uplink data, is minimized as already described above.

Preferably, the selection of the fifth cooperation set of antenna systems CSAS5 may be further based on a condition, that the processing loads of network nodes of the selected cooperation set of antenna systems are minimized or below predefined loads for being able to process uplink signals of potential further CoNP receptions from further mobile stations or that no overload at the network nodes arises.

Preferably, the first network node NN1 may further base a selection of a cooperation set of antenna systems and an assigned predefined group of radio resources (see Figure 2) on RSRP values (RSRP = reference signal received power), which have been determined for example by the first mobile station MS1 based on a reception of reference signals of neighboring radio cells such as the second radio cell C2 and/or the sixth radio cell C6 at the first mobile station MS1 and which have been reported from the first mobile station MS1 to the first base station BS1.

Further preferable, the first network node NN 1 may select a cooperation set of antenna systems and an assigned predefined group of radio resources for the first mobile station MS1, so that a network node responsible for the decoding of the received uplink signals and for the recovery of the uplink data of the first mobile station MS1 may be also a network node, which has most assigned antenna systems as part of the cooperation set of antenna systems (see Figure 3 a), d), e), f)).

In a further step M1/10 and in a similar way as described above for the step M1/9, the second network node NN2 may verify for example periodically, whether a CoMP transmission scheme for the uplink is suitable for one or several of further mobile stations such as the second mobile station MS2, which is/are located for example in the sixth radio cell C6.

In a further step M1 /11, the first network node NN 1 determines one or several first radio resources of the third predefined group of radio resources PGRR3. Thereby, the first network node NN1 automatically assigns the first mobile station MS1 to the fifth cooperation set of antenna systems CSAS5 for the uplink transmission of the uplink data from the first mobile station MS1 to the antenna system ANT-SYS1 and to the antenna system ANT-SYS2.

The antenna system ANT-SYS1 is assigned to the first base station BS1 (see Figure 1) or to the first network server NS1 (see Figure 4). The antenna system ANT-SYS2 is assigned to the second base station BS2 (see Figure 1) or to the second network server NS2 (see Figure 4).

In a next step M1/12, the first network node NN1 transmits first reservation information RES-INFO1 to the first mobile station MS1, which receives the first reservation information RES-INFO1 in a further step M1/13. The first reservation information RES-INFO1 may be for example an uplink grant message such as applied in 3GPP LTE. The first reservation information RES-INFO1 may contain for example one identifier for a single PRB or several identifiers for several PRBs of the third predefined group of radio resources PGRR3.

In a further step M1/14, the second network node NN2 determines one or several second radio resources of the third predefined group of radio resources PGRR3. Thereby, the second network node NN2 automatically assigns the second mobile station MS2 also to the fifth cooperation set of antenna systems CSAS5 for the uplink transmission of the uplink data from the second mobile station MS2 to the antenna system ANT-SYS1 and to the antenna system ANT-SYS2.

In a next step M1/15, the second network node NN2 transmits second reservation information RES-INFO2 to the second mobile station MS2, which receives the second reservation information RES-INFO2 in a further step M1/16. The second reservation information RES-INF02 may be for example a further uplink grant message such as applied in 3GPP LTE. The second reservation information RES-INF02 may contain for example one identifier for a single PRB or several identifiers for several PRBs of the third predefined group of radio resources PGRR3.

In a further optional step M1/17, the first network node NN1 transmits first scheduling information SCHEDULE-INFO1 for the first mobile station MS1 to the second network node NN2 and/or the third network node NN3, which receive the first scheduling information SCHEDULE-INFO1 in next steps M1/18, M1/18-2. Step M1/18-2 may be a network node internal message, if a network node such as the first base station BS1 contains the first scheduling unit SU1 and the first joint reception unit JRU1.

The first network node NN1 determines the corresponding second network node NN2 or the corresponding third network node NN3 based on the third predefined group of radio resources PGRR3 in which the one or the several first radio resources, which have been determined in the step M1/11, fall into (see Table 1 column 2). Alternatively, the first network node NN1 transmits the first scheduling information SCHEDULE-INFO1 to all base stations of the fifth cooperation set of antenna systems CSAS5. This allows the receiving base stations to know which PRB(s) contain uplink data of the first mobile station MS1 and therefore should be forwarded to the first network node NN1 or the third network node NN3.

The first scheduling information SCHEDULE-INFO1 may contain for example the identifier for the single PRB or the several identifiers for the several PRBs of the third predefined group of radio resources PGRR3. Preferably, the first scheduling information SCHEDULE-INFO1 may further contain an identifier for a modulation scheme to be applied for the uplink transmission such as contained within the first reservation information RES-INFO1 and/or an identifier for a coding scheme to be applied for the uplink transmission such as contained within the first reservation information RES-INFO1 and/or an identifier for the first mobile station MS1 for later identification in step M1/33 of recovered uplink data UP-DATA-MS1 as user data of the first mobile station MS1.

If the first network node NN1 or the third network node NN3 don't receive modulated and coded uplink data CM-UP-DATA1-MS1 (see step M1/28) within a predefined time, the first network node NN1 or the third network node NN3 may request a retransmission of the modulated and coded uplink data CM-UP-DATA1 -MS1.

If the step M1/18 is omitted, the second network node NN2 may transmit all radio frequency signals of all PRBs of the third predefined group of radio resources PGRR3 received at the antenna system ANT-SYS1 to the first network node NN 1 (see Figure 1) or to the third network node NN3 (see Figure 4).

In a further optional step M1/19, the second network node NN2 transmits second scheduling information SCHEDULE-INFO2 for the second mobile station MS2 to the first network node NN1 and to the third network node NN3, which receive the second scheduling information SCHEDULE-INFO2 in next steps M1/20 and M1/21. The second network node NN2 determines the corresponding third network node NN3 based on the third predefined group of radio resources PGRR3 in which the one or the several second radio resources, which have been determined in the step M1/14, fall into (see Table 1). Alternatively, the second network node NN2 transmits the second scheduling information SCHEDULE-INFO2 to all base stations of the fifth cooperation set of antenna systems CSAS5. This allows the receiving base stations to know which PRB(s) contain uplink data of the second mobile station MS and therefore should be forwarded to the first network node NN1 (see Figure 1) or to the third network node NN3 (see Figure 4).

The second scheduling information SCHEDULE-INFO2 may contain for example the identifier for the single PRB or the several identifiers for the several PRBs of the third predefined group of radio resources PGRR3.

The steps M1/17 to M1/21 may be executed between the steps M1/12, M1/15 and next steps M1/22, M1/22-2 with a time duration of 5 ms in case of 3GPP LTE.

In a next step M1/22, the first mobile station MS1 transmits the modulated and coded uplink data CM-UP-DATA-MS1 to the antenna system ANT-SYS1, which receive the modulated and coded uplink data CM-UP-DATA-MS1 in step M1/23 as first modulated and coded uplink data CM-UP-DATA1-MS1. Preferably, at quite a same time as the step M1/22 is performed, the second mobile station MS2 transmits in a further step M1/22-2 modulated and coded uplink data CM-UP-DATA-MS2 to the antenna system ANT-SYS1, which receive the modulated and coded uplink data CM-UP-DATA-MS2 as further first modulated and coded uplink data CM-UP-DATA1-MS2 during the step M1/23.

By the next step M1/22, the first mobile station MS1 further transmits the modulated and coded uplink data CM-UP-DATA-MS1 to the antenna system ANT-SYS2, which receive the modulated and coded uplink data CM-UP-DATA-MS1 in step M1/24 as second modulated and coded uplink signals CM-UP-DATA2-MS1. By the step M1/22-2, the second mobile station MS2 transmits the modulated and coded uplink data CM-UP-DATA-MS2 to the antenna system ANT-SYS2, which receive the modulated and coded uplink data CM-UP-DATA-MS2 as further second modulated and coded uplink signals CM-UP-DATA2-MS2 during the step M1/24.

In an optional step M1/25, the antenna system ANT-SYS1 or a corresponding network node such as the first network node NN1 verifies, whether the first and the further first modulated and coded uplink signals CM-UP-DATA1-MS1, CM-UP-DATA1-MS2 fulfill a predefined criterion. Therefore, a value of a characteristic parameter of the first and the further first received modulated and coded uplink signals CM-UP-DATA1-MS1, CM-UP-DATA-MS2 such as an SINR measurement value (SINR = signal to interference and noise ration) may be determined. The SINR measurement value may be determined for example by a common channel estimation algorithm of a receiver such as an MMSE receiver (MMSE = minimum mean squared error). The predefined criterion is compared with the SINR measurement value. If the SINR measurement value is equal or larger than the predefined criterion such as an SINR threshold value, the method MET1 may be continued with a further step M1/27. If the SINR measurement value is smaller than the SINR threshold value, the first and the further first modulated and coded uplink signals CM-UP-DATA1-MS1, CM-UP-DATA-MS2 are not forwarded to the second network node NN2 or the third network node NN3 and the method MET1 may be continued by step M1/31 without data from the antenna system ANT-SYS1.

In the further step M1/27, the antenna system ANT-SYS1 transmits the first and the further first modulated and coded uplink signals CM-UP-DATA1-MS1, CM-UP-DATA1-MS2 automatically without a verification or based on the verification as described above to the first network node NN1 (see Figure 1) or the third network node NN3 (see Figure 4), which receives the first and the further first modulated and coded uplink signals CM-UP-DATA1-MS1, CM-UP-DATA1-MS2 in a next step M1/28. The further first modulated and coded uplink signals CM-UP-DATA1-MS2 may be transmitted automatically without verification by transmitting all received PRBs or based on the reception of the second scheduling information SCHEDULE-INFO2, which indicate the PRB or the PRBs, by transmitting only those PRB(s) that contain the further first modulated and coded uplink signals CM-UP-DATA1 -MS2.

The first and the further first modulated and coded uplink signals CM-UP-DATA1-MS1, CM-UP-DATA1-MS2 may be for example an OFDM frame comprising so-called I/Q samples.

In an optional step M1/26, the antenna system ANT-SYS2 or a corresponding network node such as the second network node NN2 verifies, whether the second and the further second modulated and coded uplink signals CM-UP-DATA2-MS1, CM-UP-DATA2-MS2 fulfill the predefined criterion such as the SINR threshold value. If the SINR measurement value is equal or larger than the predefined criterion, the method MET1 may be continued with a further step M1/29. If the SINR measurement value is smaller than the SINR threshold value, the second and the further second modulated and coded uplink signals CM-UP-DATA2-MS1, CM-UP-DATA2-MS2 are not forwarded to the first network node NN1 or the third network node NN3 and the method MET1 may be continued by step M1/31 without data from the antenna system ANT-SYS2. In the further step M1/29, the antenna system ANT-SYS2 transmits the second and the further second modulated and coded uplink signals CM-UP-DATA2-MS1, CM-UP-DATA2-MS2 automatically without a verification as described above or based on the verification as described above to the first network node NN1 (see Figure 1) or the third network node NN3 (see Figure 4), which receives the second and the further second modulated and coded uplink signals CM-UP-DATA2-MS1, CM-UP-DATA2-MS2 in a next step M1/30. The second modulated and coded uplink signals CM-UP-DATA2-MS1 may be transmitted automatically without a verification by transmitting all received PRBs or based on the reception of the first scheduling information SCHEDULE-INFO1, which indicate the PRB or the PRBs, by transmitting only those PRB(s) that contain the second modulated and coded uplink signals CM-UP-DATA2-MS1.

The second and the further second modulated and coded uplink signals CM-UP-DATA2-MS1, CM-UP-DATA2-MS2 may be for example the OFDM frame comprising further I/Q samples.

In the next step M1/31, the first network node NN1 or the third network node NN3 decodes recovers the uplink data of the first mobile station MS1 and the second mobile station MS2 based on the first and the further first modulated and coded uplink signals CM-UP-DATA1-MS1, CM-UP-DATA1-MS2 and the second and the further second modulated and coded uplink signals CM-UP-DATA2-MS1, CM-UP-DATA2-MS2 in a conventional way by a so-called joint decoding, which may apply a same algorithm as used for a decoding of radio frequency signals received from a single antenna systems such as described for example in Patrick Marsch, Gerhard Fettweis: "Coordinated Multi-point in Mobile Communications", Cambridge University Press, 2011. The recovering step M1/31 is mainly based on conventional substeps such as decoding, demodulation, error detection, and error correction.

According to a first alternative, in a further step M1/32, the first network node NN1 or the third network node NN3 transmits the recovered uplink data UP-DATA-MS2 of the second mobile station MS2 or an error report ERROR-REP to the second network node NN2, which receives the recovered uplink data UP-DATA-MS2 or the error report ERROR-REP in a next step M1/33. The error report ERROR-REP may contain an indication for one PRB or indications for several PRBs, which are known to the first network node NN1 or the third network node NN3 by the reception of the first scheduling information SCHEDULE-INFO1, that uplink data contained in this PRB or these PRBs could not be recovered error-free by the first network node NN1 or the third network node NN3.

In a further step M1/34 of the first alternative, if the second network node NN2 receives the uplink data UP-DATA-MS2, the second network node NN2 transmits or forwards the uplink data UP-DATA-MS2 to a core network node of a cellular mobile communication network such as an S-GW (S-GW = Serving Gateway) in 3GPP LTE. If the second network node NN2 receives the error report ERROR-REP, a retransmission (ARQ = Automatic Repeat Request or HARQ = Hybrid ARQ) is scheduled, otherwise transmission of new data can occur as reception was successful.

According to a second alternative, in a further step M1/32-2, the first network node NN1 or the third network node NN3 transmits the recovered uplink data UP-DATA-MS2 of the second mobile station MS2 directly to the core network node of the cellular mobile communication network such as the S-GW in 3GPP LTE. For the second alternative, further information of higher layers (e.g. RLC = radio link control, PDCP = Packet Data Convergence Protocol) such as RLC status PDUs (PDU = protocol data unit) or PDCP Control PDUs needs to be transmitted from the second network node NN2 to the first network node NN1 or the third network node NN3 prior to the step M1/31. Preferably, the second alternative contains by a next step M1/32-3 a transmission of an acknowledgement report OK-REP from the first network node NN1 or the third network node NN3 to the second network node NN2, which is received at the second network node NN2 by a further step M1/32-4. The acknowledgement report OK-REP contains an acknowledgement, that the first network node NN1 or the third network node NN3 has successfully recovered the uplink data UP-DATA-MS2. Thereby, the second network node NN2 gets knowledge, that a retransmission must not be requested from the second mobile station MS2. A direct transmission of uplink data of the first mobile station MS1, which have been recovered at the first network node NN1 or at the third network node NN3, from the first network node NN1 or the third network node NN3 to the core network node of the cellular mobile communication network such as the S-GW in 3GPP LTE is not shown in Figure 5b for simplification.

Also not shown for simplification is an alternative similar to those of the steps M1/31, M1/33 and M1/34 for a transmission of the recovered uplink data of the first mobile station MS1 or for a transmission of a further error report regarding the uplink data of the first mobile station MS1 from the third network node NN3 to the first network node NN1 regarding the embodiment of Figure 4.

In a further optional step M1/35, the first network node NN1 or the third network node NN3 preferably transmits first optimization information OPTIMIZ-INFO1 to the first network node NN1, which receives the first optimization information OPTIMIZ-INFO1 in a next step M1/36. The first optimization information OPTIMIZ-INFO1 contains for example channel state information of the uplink transmission from the first mobile station MS1 to the antenna system ANT-SYS1 and preferably to the antenna system ANT-SYS2. The steps M1/35 and M1/36 may be network node internal steps, if a same network node such as the first base station BS1 contains the first joint reception unit JRU1 and the first scheduling unit SU1. The first network node NN1 may use the first optimization information OPTIMIZ-INFO1 to adapt the next transmission of the uplink data at the first mobile station MS1 and therefore may transmit adapted control information to the first mobile station MS1 in the step M1/12 in the next iteration.

In a further optional step M1/37, the first network node NN1 or the third network node NN3 preferably transmits second optimization information OPTIMIZ-INF02 to the second network node NN2, which receives the second optimization information OPTIMIZ-INFO2 in a next step M1/38. The second optimization information OPTIMIZ-INFO2 contains for example channel state information of the uplink transmission from the second mobile station MS2 to the antenna system ANT-SYS2 and preferably to the antenna system ANT-SYS1. Alternatively, the second optimization information OPTIMIZ-INF02 may be transmitted during the step M1/32 in parallel to the uplink data UP-DATA-MS2 or the error report ERROR-REP.

If a retransmission of uplink data is required or if further uplink data needs to be transmitted from the first mobile station MS1 and/or the second mobile station MS2, the method MET1 may be repeated beginning at the step M1/9 and/or the step M1 /10.

The method MET1 is described with respect to the first mobile station MS1, the antenna system ANT-SYS1, the first network node NN1, the second mobile station MS2, the antenna system ANT-SYS2, the second network node NN2 and the third network node NN3. For a person skilled in the art it is clear, that the method MET1 may be extended with respect to further mobile stations, further antenna systems and further network nodes.

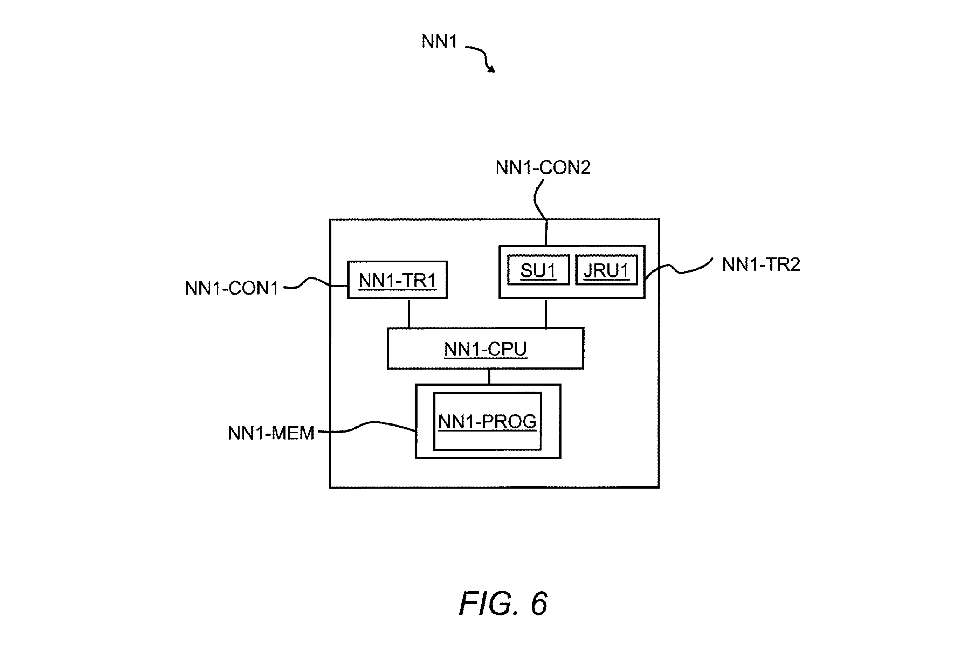

Referring to Figure 6 a block diagram of the first network node NN1 is shown. The first network node NN1 may be for example the first base station BS1 or the first network server NS1.

The first network node NN1 may contain an external connector NN1-CON1, a transceiver NN1-TR1 connected internally to the external connector NN1-CON1, a CPU (CPU = central processing unit) NN1-CPU, and a computer readable medium NN1-MEM. A computer readable program NN1-PROG may be stored at the computer readable medium NN1-MEM. The CPU NN1-CPU is foreseen for executing the computer readable program NN1-PROG. The computer readable program NN1-PROG is foreseen for executing and controlling steps of the method MET1, which are related to the first base station BS1 or the first network server NS1.

The first network node NN1 may receive via the external connector NN 1-CON1 and the transceiver NN1-TR1 the first allocation information ALOC-INFO1, the second scheduling information SCHEDULE-INFO2, and the first optimization information OPTIMIZ-INFO1.

The first network node NN1 may transmit via the external connector NN1-CON1 and the transceiver NN1-TR1 the first scheduling information SCHEDULE-INFO1.

If the first network node NN1 is the first base station BS1, the first network node NN1 may further contain a further transceiver NN1-TR2 and a further external connector NN1-CON2. The further external connector NN1-CON2 may be adapted to connect the antenna system ANT-SYS1. The further transceiver NN1-TR2 may be a radio transceiver and may contain the first scheduling unit SU1 and the first joint reception unit JRU1.

If the first network node NN1 is the first network server NS1, the transceiver NN1-TR1 may contain the first scheduling unit SU1 and not a joint reception unit (this embodiment is not shown in Figure 6).

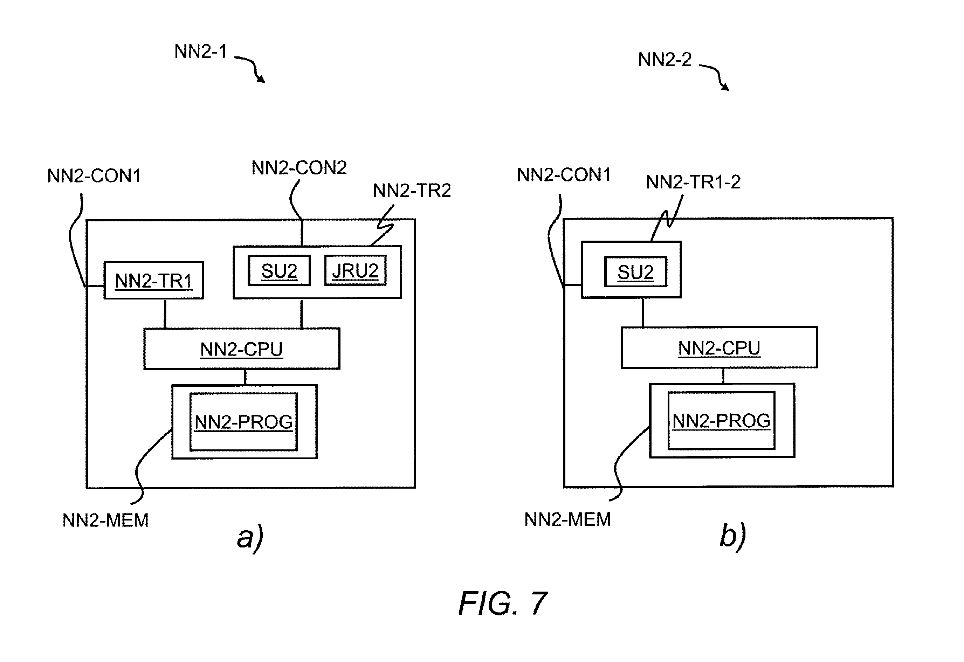

Referring to Figure 7 two block diagrams of second network nodes NN2-1, NN2-2 are shown. The second network nodes NN2-1, NN2-2 relate to the second network node NN2 shown in Figure 5.

The second network node NN2-1 may be for example the second base station BS2 and the further second network node NN2-2 may be for example the second network server NS2.

Regarding Figure 7 a), the second network node NN2-1 may contain an external connector NN2-CON1, a transceiver NN2-TR1 connected internally to the external connector NN2-CON1, a CPU (CPU = central processing unit) NN2-CPU, and a computer readable medium NN2-MEM. A computer readable program NN2-PROG may be stored at the computer readable medium NN2-MEM. The CPU NN2-CPU is foreseen for executing the computer readable program NN2-PROG. The computer readable program NN2-PROG is foreseen for executing and controlling steps of the method MET1, which are related to the second network node NN2.

The second network node NN2-1 may receive via the external connector NN2-CON1 and the transceiver NN2-TR1 the second allocation information ALOC-INF02, the first scheduling information SCHEDULE-INFO1, the uplink data UP-DATA-MS2 and the second optimization information OPTIMIZ-INF02.

The second network node NN2-1 may transmit via the external connector NN2-CON1 and the transceiver NN2-TR1 the second scheduling information SCHEDULE-INFO2, and the uplink data UP-DATA1-MS2.

The second network node NN2-1 further contains a further transceiver NN2-TR2 and a further external connector NN2-CON2. The further external connector NN2-CON2 may be adapted to connect the antenna system ANT-SYS2 (as shown in Figure 7). The further transceiver NN2-TR2 may be a radio transceiver and may contain the second scheduling unit SU2 and the second reception unit JRU2 and is used for example to transmit the second reservation information RES-INFO2.

In comparison to Figure 7 a), the second network node NN2-2 may comprise a single transceiver NN2-TR1-2 and the transceiver NN2-TR1-2 may contain the second scheduling unit SU2.

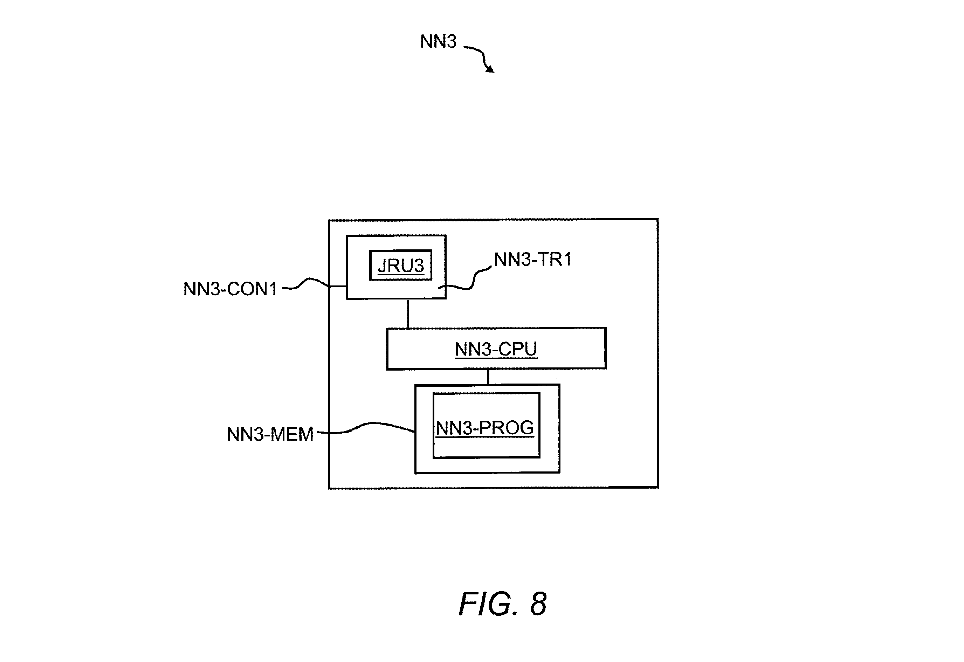

Referring to Figure 8 a block diagram of the third network node NN3 is shown. The third network node NN3 may be for example the third network server NS3.

The third network node NN3 may contain an external connector NN3-CON1, a transceiver NN3-TR1 connected internally to the external connector NN3-CON1, a CPU (CPU = central processing unit) NN3-CPU, and a computer readable medium NN3-MEM. A computer readable program NN3-PROG may be stored at the computer readable medium NN3-MEM. The CPU NN3-CPU is foreseen for executing the computer readable program NN3-PROG. The computer readable program NN3-PROG is foreseen for executing and controlling steps of the method MET1, which are related to the third network server NS3.

The first network node NN3 may receive via the external connector NN3-CON1 and the transceiver NN3-TR1 the third allocation information ALOC-INFO3, the first scheduling information SCHEDULE-INFO1, the second scheduling information SCHEDULE-INFO2, the first and the further first modulated and coded uplink signals CM-UP-DATA1-MS1, CM-UP-DATA1-MS2, and the second and the further second modulated and coded uplink signals CM-UP-DATA2-MS1, CM-UP-DATA2-MS2.

The third network node NN3 may transmit via the external connector NN3-CON1 and the transceiver NN3-TR1 the first optimization information OPTIMIZ-INFO1, the second optimization information OPTIMIZ-INFO2, the recovered uplink data UP-DATA-MS2 of the second mobile station MS2, the acknowledgement report OK-REP for an error-free recovery of the uplink data UP-DATA-MS2 of the second mobile station MS2, the error report ERROR-REP for a not error-free recovery of the uplink data UP-DATA-MS2 of the second mobile station MS2, the recovered uplink data of the first mobile station MS1, a further acknowledgement report for an error-free recovery of the uplink data of the first mobile station MS1, and/or the further error report for a not error-free recovery of the uplink data of the first mobile station MS1.

The transceiver NN3-TR1 may contain the third joint reception unit JRU3.

A person of skill in the art would readily recognize that steps of the method MET1 of the above-described embodiments can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "... unit" or "means for ..." shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, may be provided through the use of dedicated hardware as well as the through the use of hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method (MET1) for transmitting uplink data (UP-DATA-MS2), said method (MET1) comprising the steps of:
- determining (M1/14) at a network node (NN2, BS2, NS2) at least one first radio resource for an uplink transmission of said uplink data (UP-DATA-MS2) from a mobile station (MS2) to a first antenna system (ANT-SYS2, AS3-BS2, AS6) of a cooperation set of antenna systems (CSAS5) that is assigned to said network node (NN2, BS2, NS2) and to a second antenna system (ANT-SYS1, AS1-BS1, AS1) of said cooperation set of antenna systems (CSAS5) that is assigned to a further network node (NN1, BS1, NS1),
- providing (M1/27) a received first uplink signal (CM-UP-DATA1-MS2) of said first uplink transmission from said first antenna system (ANT-SYS2, AS3-BS2, AS6) to said further network node (NN1, BS1) or to an even further network node (NN3, NS3), and
- recovering (M1/31) at said further network node (NN1, BS1) or at said even further network node (NN3, NS3) said uplink data (UP-DATA-MS2) based on said received first uplink signal (CM-UP-DATA1-MS2).

2. Method (MET1) according to claim 1, wherein said method further comprises the step of selecting (M1/10) said cooperation set of antenna systems (CSAS5) from a set of at least two cooperation sets of antenna systems (CSAS1, CSAS4, CSAS5, CSAS6) for which a load on transmission links between network nodes (BS1, BS2, NS1, NS2) controlling said cooperation set of antenna systems (CSAS5) is minimized or below a predefined transmission load and/or for which processing loads at said network nodes (BS1, BS2, NS1, NS2) are minimized or below a predefined processing load.

3. Method (MET1) according to claim 2, wherein said load on said transmission links and said processing loads are determined based on a data rate required for said uplink transmission from said mobile station (MS2) and further based on a radio link quality for said uplink transmission.

4. Method (MET1) according to any of the preceding claims, wherein said method further comprises the steps of:
- providing (M1/32) from said further network node (NN1, BS1) or from said even further network node (NN3, NS3) said recovered uplink data (UP-DATA-MS2) to said network node (NN2, BS2, NS2) serving said mobile station (MS2), and
- providing (M1/34) from said network node (NN2, BS2, NS2) said recovered uplink data (UP-DATA-MS2) to a core network node of a cellular mobile communication network or to a network gateway of a radio access network (RAN1, RAN2).

5. Method (MET1) according to any of the preceding claims, wherein said method (MET1) further comprises the step of providing (M1/32-2) from said further network node (NN 1, BS1) or from said even further network node (NN3, NS3) said recovered first uplink data (UP-DATA-MS2) directly to a core network node of a cellular mobile communication network or to a network gateway of a radio access network (RAN1, RAN2).

6. Method (MET1) according to any of the preceding claims, wherein said method (MET1) further comprises the step of providing (M1/35, M1/37) from said further network node (NN1, BS1) or from said even further network node (NN3, NS3) optimization information (OPTIMIZ-INF02) obtained by said recovering step (M1/31) to said network node (NN2, BS2, NS2) for optimizing at said network node (NN2, BS2, NS2) a next determination of at least one further first radio resource for said uplink transmission from said mobile station (MS2) to said first antenna system (ANT-SYS2, AS3-BS2, AS6) and to said second antenna system (ANT-SYS2, AS1-BS1, AS1).

7. Method (MET1) according to any of the preceding claims, wherein said method (MET1) further comprises the step of verifying (M1/25), whether said received first uplink signal (CM-UP-DATA1-MS2) fulfills a predefined criterion, and wherein said received first uplink signal (CM-UP-DATA1-MS2) is provided to said further network node (NN1, BS1) or to said even further network node (NN3, NS3), if said predefined criterion is fulfilled.

8. Method (MET1) according to any of the preceding claims, wherein said method (MET1) further comprises the step of providing (M1/19) scheduling information (SCHEDULE-INFO2) from said network node (NN2, BS2, NS2) to said further network node (NN1, BS1 or to said even further network node (NN3, NS3).

9. Method (MET1) according to any of the preceding claims, wherein said at least one first radio resource is determined from a predefined group of radio resources (PGRR3) and wherein said method further comprises the step of assigning said predefined group of radio resources (PGRR3) to said cooperation set of antenna systems (CSAS5).

10. Method (MET1) according to claim 9, wherein said assignment of said predefined group of radio resources (PGRR3) to said cooperation set of antenna systems (CSAS5) is predefined.

11. Method (MET1) according to claim 9 or 10, wherein said method
(MET1) further comprises the steps of:
- receiving (M1/1) at said further network node (NN1, BS1, NS1) first allocation information (ALOC-INFO1) for assigning said predefined group of radio resources (PGRR3) to said cooperation set of antenna systems (CSAS5) and for recovering said uplink data (UP-DATA-MS2) based on said received first uplink signal (CM-UP-DATA1-MS2) at said further network node (NN1, BS1) or at said even further network node (NN3, NS3), and
- receiving (M1/2) at said network node (NN2, BS2, NS3) second allocation information (ALOC-INFO2) for assigning said predefined group of radio resources (PGRR3) to said cooperation set of antenna systems (CSAS5) and for recovering said uplink data (UP-DATA-MS2) based on said received first uplink signal (CM-UP-DATA1-MS2) at said further network node (NN1, BS1) or at said even further network node (NN3, NS3).

12. Method (MET1) according to any of the preceding claims 9, 10 or 11, wherein said method (MET1) further comprises the step of receiving (M1/3) at said even further network node (NN3, NS3) third allocation information (ALOC-INFO3) for assigning said predefined group of radio resources (PGRR3) to said cooperation set of antenna systems (CSAS5) and for recovering said uplink data (UP-DATA-MS2) based on said received first uplink signal (CM-UP-DATA1-MS2) at said even further network node (NN3, NS3).

13. Method (MET1) according to any of the preceding claims 9, 10, 11 or 12, wherein said cooperation set of antenna systems (CSAS5) comprises a predefined coverage area (CCRC5) and wherein said method (MET1) further comprises the step of assigning a further predefined group of radio resources (PGRR1, PGRR2, PGRR4) to a further cooperation set of antenna systems that comprises a further predefined coverage area (CCRC1, CCRC4, CCRC6) partly overlapping with said predefined coverage area (CCRC5).

14. A first network node (NN2, BS2, NS2) comprising:
- means (SU1) for determining at least one radio resource for an uplink transmission of uplink data (UP-DATA) from a mobile station (MS2) to a first antenna system (ANT-SYS2, AS3-BS2, AS6) of a cooperation set of antenna systems (CSAS5) that is assigned to said network node (NN2, BS2, NS2) and to a second antenna system (ANT-SYS1, AS1-BS1, AS1) of said cooperation set of antenna systems (CSAS5) that is assigned to a second network node (NN1, BS1, NS1), and
- means (NN1-TR1, NN1-CON1) for providing a received first uplink signal (CM-UP-DATA1-MS2) of said first uplink transmission from said first antenna system (ANT-SYS2, AS3-BS2, AS6) to said second network node (NN1, BS1) or to a third network node (NN3, NS3) for recovering said uplink data (UP-DATA-MS2) at said second network node (NN1, BS1) or at said third network node (NN3, NS3) based on said received first uplink signal (CM-UP-DATA1-MS2).

15. A second network node (NN1, BS1, NN3, NS3) comprising:
- means (NN2-TR1, NN2-CON1) for receiving from a first antenna system (ANT-SYS2, AS3-BS2, AS6) that is assigned to a first network node (NN2, BS2, NS2) a received first uplink signal (CM-UP-DATA1-MS2) of an uplink transmission of uplink data (UP-DATA-MS2) from a mobile station (MS2) to said first antenna system (ANT-SYS2, AS3-BS2, AS6), and
- means (JRU) for recovering said uplink data (UP-DATA-MS2) based on said received first uplink signal (CM-UP-DATA1-MS2).

## Amended claims

### Amended claims in accordance with Rule 137(2) EPC.

**1.** A method (MET1) for transmitting uplink data (UP-DATA-MS2), said method (MET1) comprising the steps of:
- determining (M1/14) at a network node (NN2, BS2, NS2) at least one first radio resource for an uplink transmission of said uplink data (UP-DATA-MS2) from a mobile station (MS2) to a first antenna system (ANT-SYS2, AS3-BS2, AS6) of a cooperation set of antenna systems (CSAS5) that is assigned to said network node (NN2, BS2, NS2) and to a second antenna system (ANT-SYS1, AS1-BS1, AS1) of said cooperation set of antenna systems (CSAS5) that is assigned to a further network node (NN1, BS1, NS1),
- providing (M1/27) a received first uplink signal (CM-UP-DATA1-MS2) of said uplink transmission from said first antenna system (ANT-SYS2, AS3-BS2, AS6) to said further network node (NN1, BS1) or to an even further network node (NN3, NS3), and
- jointly decoding and recovering (M1/31) at said further network node (NN1, BS1) or at said even further network node (NN3, NS3) said uplink data (UP-DATA-MS2) based on said received first uplink signal (CM-UP-DATA1-MS2) and based on a second uplink signal (CM-UP-DATA1-MS2) received from said second antenna system (ANT-SYS1, AS1-BS1, AS1).

**2.** Method (MET1) according to claim 1, wherein said method further comprises the step of selecting (M1/10) said cooperation set of antenna systems (CSAS5) from a set of at least two cooperation sets of antenna systems (CSAS1, CSAS4, CSAS5, CSAS6) for which a load on transmission links between network nodes (BS1, BS2, NS1, NS2) controlling said cooperation set of antenna systems (CSAS5) is minimized or below a predefined transmission load and/or for which processing loads at said network nodes (BS1, BS2, NS1, NS2) are minimized or below a predefined processing load.

**3.** Method (MET1) according to claim 2, wherein said load on said transmission links and said processing loads are determined based on a data rate required for said uplink transmission from said mobile station (MS2) and further based on a radio link quality for said uplink transmission.

**4.** Method (MET1) according to any of the preceding claims, wherein said method further comprises the steps of:
- providing (M1/32) from said further network node (NN1, BS1) or from said even further network node (NN3, NS3) said recovered uplink data (UP-DATA-MS2) to said network node (NN2, BS2, NS2) serving said mobile station (MS2), and
- providing (M1/34) from said network node (NN2, BS2, NS2) said recovered uplink data (UP-DATA-MS2) to a core network node of a cellular mobile communication network or to a network gateway of a radio access network (RAN1, RAN2).

**5.** Method (MET1) according to any of the preceding claims, wherein said method (MET1) further comprises the step of providing (M1/32-2) from said further network node (NN1, BS1) or from said even further network node (NN3, NS3) said recovered first uplink data (UP-DATA-MS2) directly to a core network node of a cellular mobile communication network or to a network gateway of a radio access network (RAN1, RAN2).

**6.** Method (MET1) according to any of the preceding claims, wherein said method (MET1) further comprises the step of providing (M1/35, M1/37) from said further network node (NN1, BS1) or from said even further network node (NN3, NS3) channel state information (OPTIMIZ-INFO2) of said uplink transmission obtained by said recovering step (M1/31) to said network node (NN2, BS2, NS2) for optimizing at said network node (NN2, BS2, NS2) a next determination of at least one further first radio resource for said uplink transmission from said mobile station (MS2) to said first antenna system (ANT-SYS2, AS3-BS2, AS6) and to said second antenna system (ANT-SYS2, AS1-BS1, AS1).

**7.** Method (MET1) according to any of the preceding claims, wherein said method (MET1) further comprises the step of verifying (M1/25), whether said received first uplink signal (CM-UP-DATA1-MS2) fulfills a predefined criterion, and wherein said received first uplink signal (CM-UP-DATA1-MS2) is provided to said further network node (NN1, BS1) or to said even further network node (NN3, NS3), if said predefined criterion is fulfilled.

**8.** Method (MET1) according to any of the preceding claims, wherein said at least one first radio resource is determined from a predefined group of radio resources (PGRR3) and wherein said method further comprises the step of assigning said predefined group of radio resources (PGRR3) to said cooperation set of antenna systems (CSAS5).

**9.** Method (MET1) according to claim 8, wherein said assignment of said predefined group of radio resources (PGRR3) to said cooperation set of antenna systems (CSAS5) is predefined.

**10.** Method (MET1) according to claim 8 or 9, wherein said method (MET1) further comprises the steps of:
- receiving (M1/1) at said further network node (NN1, BS1, NS1) first allocation information (ALOC-INFO1) for assigning said predefined group of radio resources (PGRR3) to said cooperation set of antenna systems (CSAS5) and for recovering said uplink data (UP-DATA-MS2) based on said received first uplink signal (CM-UP-DATA1-MS2) at said further network node (NN1, BS1) or at said even further network node (NN3, NS3), and
- receiving (M1/2) at said network node (NN2, BS2, NS3) second allocation information (ALOC-INFO2) for assigning said predefined group of radio resources (PGRR3) to said cooperation set of antenna systems (CSAS5) and for recovering said uplink data (UP-17ATA-MS2) based on said received first uplink signal (CM-UP-DATA1-MS2) at said further network node (NN1, BS1) or at said even further network node (NN3, NS3).

**11.** Method (MET1) according to any of the preceding claims 8, 9 or 10, wherein said method (MET1) further comprises the step of receiving (M1/3) at said even further network node (NN3, NS3) third allocation information (ALOC-INFO3) for assigning said predefined group of radio resources (PGRR3) to said cooperation set of antenna systems (CSAS5) and for recovering said uplink data (UP-DATA-MS2) based on said received first uplink signal (CM-UP-DATA1-MS2) at said even further network node (NN3, NS3).

**12.** Method (MET1) according to any of the preceding claims 8, 9, 10 or 11, wherein said cooperation set of antenna systems (CSAS5) comprises a predefined coverage area (CCRC5) and wherein said method (MET1) further comprises the step of assigning a further predefined group of radio resources (PGRR1, PGRR2, PGRR4) to a further cooperation set of antenna systems that comprises a further predefined coverage area (CCRC1, CCRC4, CCRC6) partly overlapping with said predefined coverage area (CCRC5).

**13.** Method (MET1) according to claim 1, wherein said further network node (NN1, BS1) is a base station and wherein said recovery step (M1/31) is done by said base station of said cooperation set of antenna systems (CSAS5) for all mobile stations (MS1, MS2), that share said cooperation set of antenna systems (CSAS5) and that share same time radio resources and/or frequency radio resources.

**14.** A first network node (NN2, BS2, NS2) comprising:
- means (SU1) for determining at least one radio resource for an uplink transmission of uplink data (UP-DATA) from a mobile station (MS2) to a first antenna system (ANT-SYS2, AS3-BS2, AS6) of a cooperation set of antenna systems (CSAS5) that is assigned to said network node (NN2, BS2, NS2) and to a second antenna system (ANT-SY51, AS1-BS1, AS1) of said cooperation set of antenna systems (CSAS5) that is assigned to a second network node (NN1, BS1, NS1), and
- means (NN1-TR1, NN1-CON1) for providing a received first uplink signal (CM-UP-DATA1-MS2) of said uplink transmission from said first antenna system (ANT-SYS2, AS3-BS2, AS6) to said second network node (NN1, BS1) or to a third network node (NN3, NS3) for jointly decoding and recovering said uplink data (UP-DATA-MS2) at said second network node (NN1, BS1) or at said third network node (NN3, NS3) based on said received first uplink signal (CM-UP-DATA1-MS2) and based on a second uplink signal (CM-UP-DATA1-MS2) received from said second antenna system (ANT-SYS1, AS1-BS1, AS1).

**15.** A second network node (NN1, BS1, NN3, NS3) comprising:
- means (NN2-TR1, NN2-CON1) for receiving from a first antenna system (ANT-SYS2, AS3-BS2, AS6) that is assigned to a first network node (NN2, BS2, NS2) a received first uplink signal (CM-UP-DATA1-MS2) of an uplink transmission of uplink data (UP-DATA-MS2) from a mobile station (MS2) to said first antenna system (ANT-SYS2, AS3-BS2, AS6),
- means (JRU) for recovering said uplink data (UP-DATA-MS2) based on said received first uplink signal (CM-UP-DATA1-MS2), and
- means (NN2-TR1, NN2-CON1) for providing to said first network node (NN2, BS2, NS2) channel state information (OPTIMIZ-INFO2) of said uplink transmission obtained by said means (JRU) for recovering said uplink data (UP-DATA-MS2) for optimizing at said first network node (NN2, BS2, NS2) a next determination of at least one further first radio resource for said uplink transmission from said mobile station (MS2) to said first antenna system (ANT-SYS2, AS3-BS2, AS6) and to said second antenna system (ANT-SYS2, AS1-BS1, AS1).
